# EUROPÄISCHE PATENTANMELDUNG

(11) **EP 0 703 100 A2**
(43) Veröffentlichungstag der Anmeldung: **27.03.1996**
(21) Anmeldenummer: 95106169.6
(22) Anmeldetag: 25.04.1995
(51) Int. Cl.: B60B 3/14

(54) **Felge mit Adapterscheibe**

(30) Priorität: 23.08.1994 DE 9413537 U; 21.10.1994 DE 4437606
(71) Anmelder: Gundel, Georg, D-91785 Pleinfeld (DE)
(72) Erfinder: Gundel, Georg, D-91785 Pleinfeld (DE)
(74) Vertreter: Merten, Fritz

(57) **Zusammenfassung**

Felge mit Adapterscheibe (1) für die Anpassung an unterschiedliche Nabenlochkreise bei Kraftfahrzeugen, wobei die Adapterscheibe zwischen der Felge (9) und der Nabe angeordnet ist, wobei die Adapterscheibe (1) in wenigstens eine Ausnehmung oder Ausdrehung der Felge eingesetzt und formschlüssig in der wenigstens einen Ausnehmung oder Ausdrehung zentriert ist.

## Beschreibung

Die Erfindung betrifft eine Felge mit Adapterscheibe mit den Merkmalen des Oberbegriffs des Anspruchs 1.

Eine Felge mit Adapterscheibe für die Anpassung an unterschiedliche Nabenlochkreisdurchmesser bei Kraftfahrzeugen, wobei die Adapterscheibe zwischen der Felge und der Nabe angeordnet ist, ist aus der FR-A-21 72 018 bekannt. Für unterschiedliche Lochkreise müssen hier unterschiedliche Adaptersätze vorgehalten werden. Die EP-A-0 553 696 zeigt einen Felgenadapter, bestehend aus zwei Scheiben, von denen eine zwischen der Nabe und der Felge und die andere außerhalb angeordnet ist. Auch wird hier ein Universallochkreis für 4- und 5-Lochkreise offenbart, wobei die Lochkreisdurchmesservarianten durch Langlöcher ausgeglichen werden.

Aufgabe der vorliegenden Erfindung ist es, eine Felge mit Adapterscheibe zu schaffen, mit der verschiedene Lochkreise und Lochkreisdurchmesser abgedeckt werden können, die montiert möglichst wenige, aufeinanderliegende verschraubte Teile aufweist, bei der ein axialer Längenausgleich leicht herzustellen ist und die gegenüber radial wirkenden Kräften eine erhöhte Festigkeit aufweist.

Diese Aufgabe wird mit den im kennzeichnenden Teil des Anspruchs 1 genannten Merkmalen gelöst. Fortbildungen und vorteilhafte Ausführungen der Erfindung sind in den weiteren Ansprüchen umfaßt.

Erfindungsgemäß ist die Adapterscheibe in wenigstens eine Ausnehmung oder Ausdrehung der Felge eingesetzt und formschlüssig in der wenigstens einen Ausnehmung oder Ausdrehung zentriert.

Vorteilhafterweise ist die Adapterscheibe mit wenigstens einem Vorsprung in die wenigstens eine Ausnehmung oder Ausdrehung eingesetzt, so daß ihr äußerer Körper die Ausnehmung oder Ausdrehung seitlich übergreift. Der äußere Körper kann für den Ausgleich von Einpreßtiefen abgedreht werden.

Die Adapterscheibe und/oder die Felge können als Zwischenprodukt ohne aufgebohrte Lochkreise vorliegen. Dadurch kann eine Standardfelge mit Adapterscheibe vor Ort verschiedenen Lochkreisen und Lochkreisdurchmessern einfach angepaßt werden.

Die Felge und die Adapterscheibe weisen in bekannter Art Mittenbohrungen auf, wobei in die Mittenbohrung der Adapterscheibe ein Zentrierring eingesetzt sein kann. Nach einer bevorzugten Ausführung der Erfindung ist die Ausnehmung für die Adapterscheibe als Vertiefung um die Mittenbohrung ausgeführt und die Ausnehmung und die Außenkontur der Adapterscheibe wirken zueinander selbstzentrierend und verdrehsicher. Nach einer besonders bevorzugten Ausführung der Erfindung weisen die Ausnehmung und die Adapterscheibe einen ersten und einen zweiten gemeinsamen Radius auf, wobei der erste Radius einen Vollkreis beschreibt, auf welchem Mittelpunkte für Ausbuchtungen liegen und der zweite Radius um die äußere Kontur der Ausbuchtungen verläuft. Die Ausbuchtungen decken einen Universallochkreis ab.

Nach einer anderen Ausführung der Erfindung ist der Felgenadapter scheibenartig mit in die Lochkreisbohrungen oder eine hinter diesen liegenden Ausdrehung der Felge und die Nabenlochbohrung der Felge passend eingreifenden Vorsprüngen ausgebildet und er ist zwischen der Radnabe und der Felge angeordnet. Die Vorsprünge für die Lochkreisbohrungen weisen aufgebohrte Durchgangslöcher für die Befestigungsschrauben auf und die Nabenlochbohrung ist aus dem vollen Material oder einer kleineren Bohrung aufgebohrt, bzw. ausgedreht. Die Stärke des Felgenadapters ist durch spanende Bearbeitung an die erforderliche Einpreßtiefe anpaßbar. Vorzugsweise liegt der Felgenadapter zunächst als im wesentlichen massives Teil, ggf. mit einer dem Minimum angepaßten Nabenlochbohrung vor. Die Vorsprünge für die Lochkreisbohrungen haben der zugehörigen Felge entsprechend Langlochform. Je nach Lochkreis werden die Vorsprünge passend aufgebohrt. Auch die Nabenlochbohrung wird passend ausgebohrt oder ausgedreht, oder sie ist als Normbohrung zum Einsetzen von Zentrierringen ausgestaltet. Die Einpreßtiefe ist durch Abdrehen der Adapterstärke, die zunächst am Maximum liegt, regulierbar.

Nach einer vorteilhaften weiteren Ausführung der Erfindung weist der Felgenadapter einen zylindrischen, stufenartigen Aufbau auf, bestehend aus einer ersten, an der Felge außen anliegenden Stufe, einer zweiten Stufe mit verringertem Durchmesser und passend in eine hinter den Lochkreisbohrungen angeordnete Ausdrehung der Felge eingreifend, sowie einer dritten Stufe mit weiter verringertem Durchmesser und passend in die Nabenlochbohrung oder eine hinter dieser liegenden Ausdrehung der Felge eingreifend.

Auf seiner der Felge abgewandten Seite kann der Felgenadapter gewichtsreduzierende Ausnehmungen aufweisen.

Zur Erhöhung der Stabilität kann der Felgenadapter einen dem Felgenprofil entsprechenden umlaufenden Kontursteg aufweisen.

Im folgenden wird die Erfindung anhand von Zeichnungen beispielhaft näher beschrieben. Dabei zeigen:
- Fig. 1: einen Schnitt durch eine erste Ausführung eines Felgenadapters;
- Fig. 2: einen Schnitt durch einen mit einer Felge verbundenen Felgenadapter gemäß Fig. 1;
- Fig. 3: eine Draufsicht auf den Felgenadapter gemäß Fig. 1 und 2;
- Fig. 4: eine Draufsicht auf eine zweite Ausführungsform eines Felgenadapters;
- Fig. 5: einen Schnitt durch den Felgenadapter gemäß Fig. 4 mit einer Felge;
- Fig. 6: eine Untersicht des Felgenadapters gemäß Fig. 4 und 5.
- Fig. 7: eine Draufsicht auf eine Felge, teilweise im Schnitt;
- Fig. 8: eine Draufsicht auf eine Adapterscheibe;
- Fig. 9: einen Schnitt durch die Adapterscheibe von Fig. 8;
- Fig. 10: einen Schnitt durch die mit der Adapterscheibe von Fig. 8 und 9 zusammengebaute Felge von Fig. 7;
- Fig. 11: einen Zentrierring.

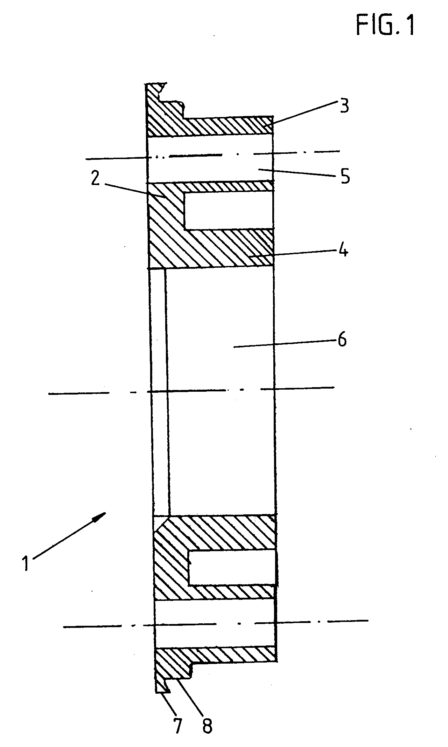

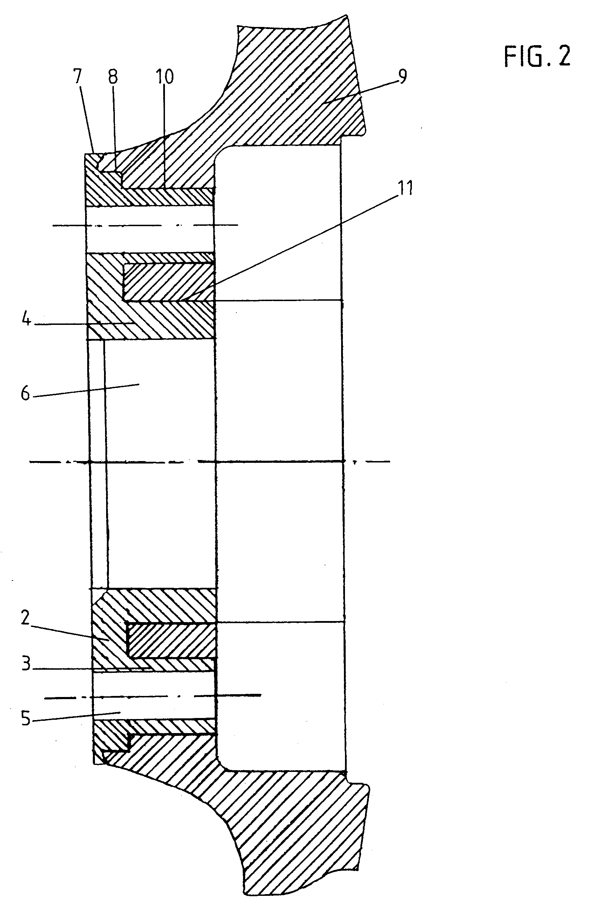

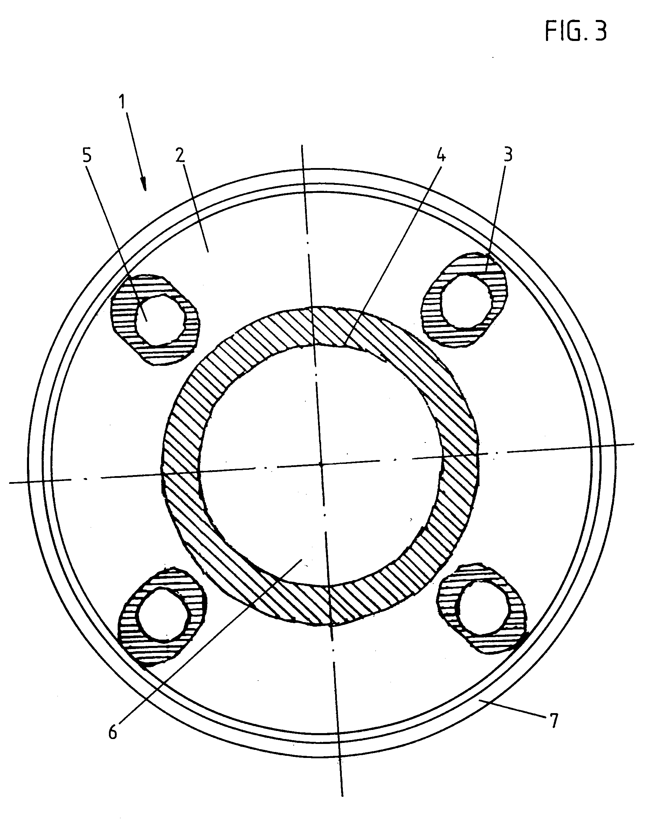

Der Felgenadapter 1 gemäß den Fig. 1 bis 3 besteht aus einem scheibenförmigen Grundkörper 2, der mit, mit Lochkreisbohrungen 5 und einer Nabenbohrung 6 versehenen Vorsprüngen 3, 4 ausgestattet ist, die in die entsprechenden Lochkreisbohrungen 10, bzw. die entsprechende Nabenbohrung 11 der Felge 9 greifen und mit dieser bündig sind. Auf der Rückseite weist der Felgenadapter 1 einen umlaufenden Kontursteg 7 auf, der dem Außenprofil der Felge 9 angepaßt ist.

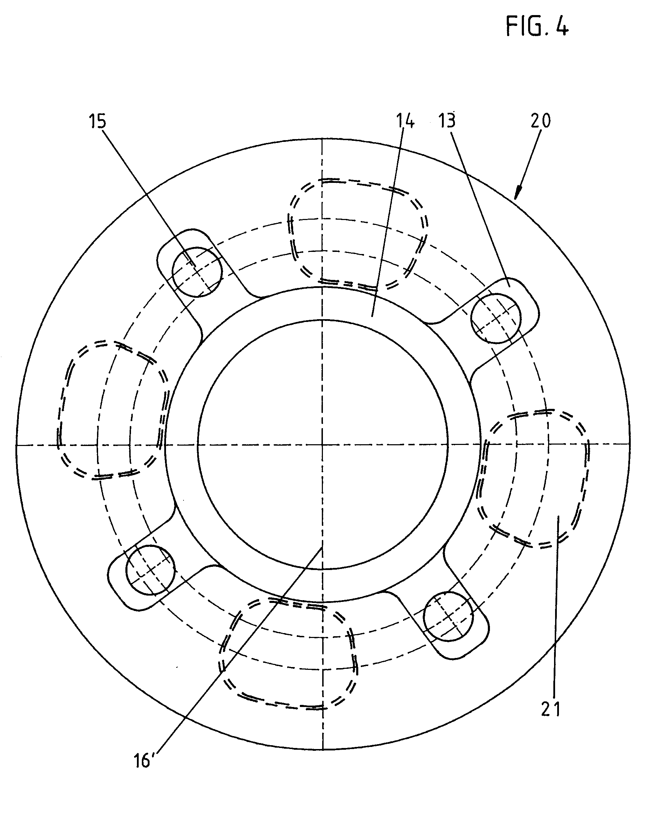

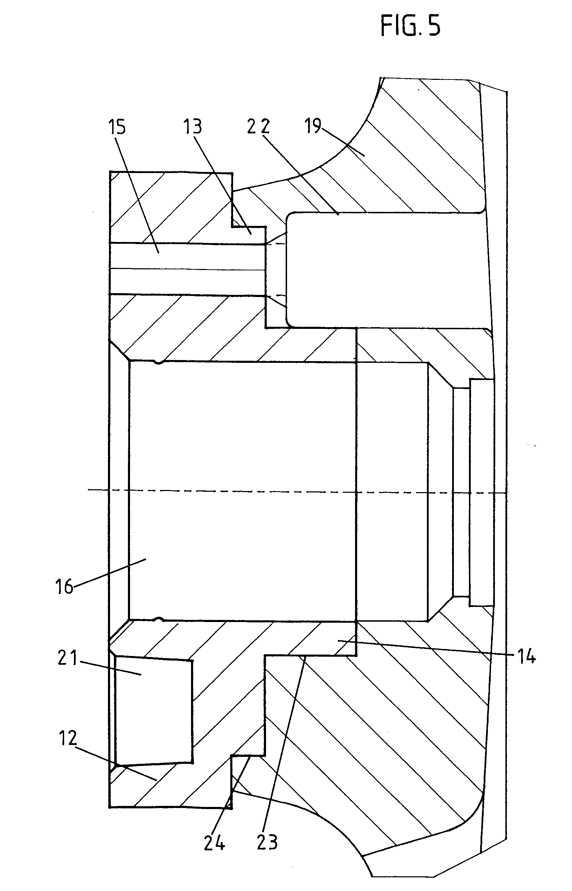

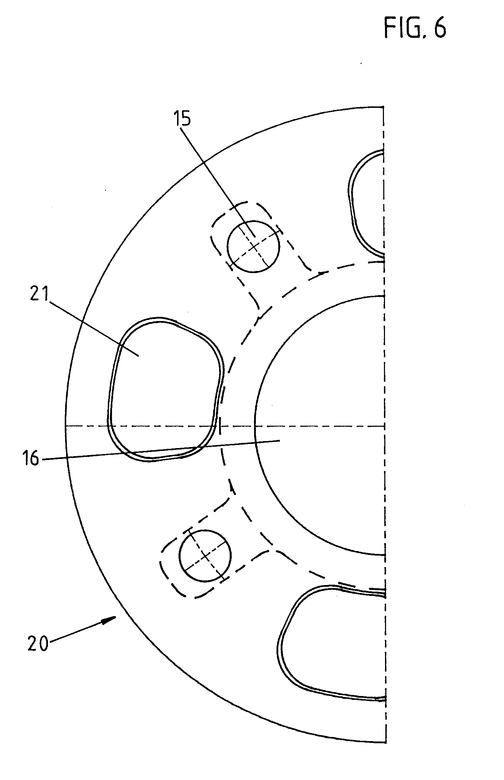

Der Felgenadapter gemäß den Fig. 4 bis 6 weist einen zylindrischen, stufenartigen Aufbau auf, bestehend aus einer ersten, an der Felge 19 außen anliegenden Stufe 12, einer zweiten Stufe 13 mit verringertem Durchmesser und passend in eine hinter den Lochkreisbohrungen 22 angeordnete Ausdrehung 24 der Felge 19 eingreifend, sowie einer dritten Stufe 14 mit weiter verringertem Durchmesser und passend in die Nabenlochbohrung 16 oder eine hinter dieser liegenden Ausdrehung 23 der Felge 19 eingreifend. In der Draufsicht ist erkennbar, wie die innere Stufe 14 ringartig ausgebildet ist und eine mit der Nabenlochbohrung der Felge 19 bündige Bohrung 16' aufweist, wobei die zweite Stufe 14 aus sternförmig, entsprechend dem Lochkreis der Felge angeordneten einzelnen Vorsprüngen besteht, während die erste Stufe scheibenförmig ausgebildet ist. Die Bohrung 16' setzt sich durch den ganzen Felgenadapter 20 fort. Auf seiner der Felge 19 abgewandten Seite kann der Felgenadapter 20 gewichtsreduzierende Ausnehmungen 21 aufweisen.

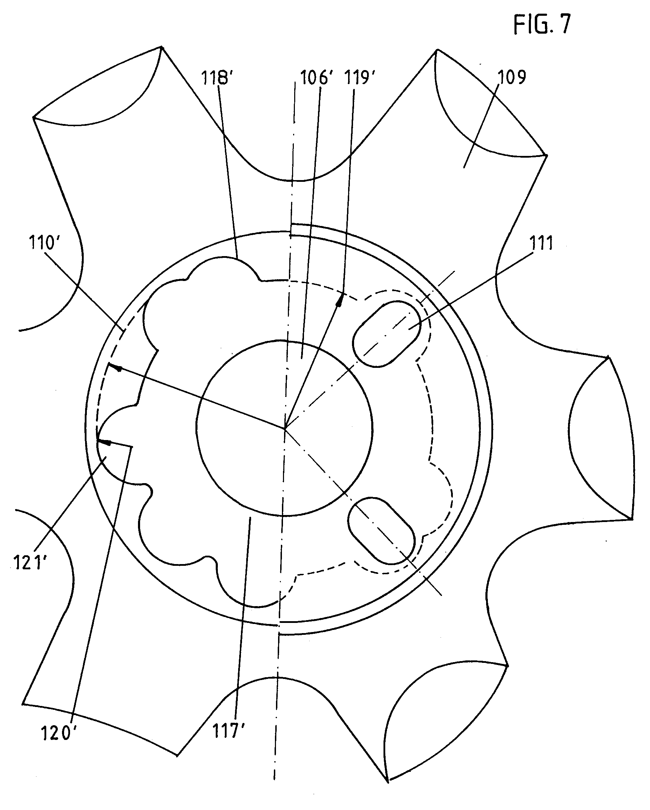

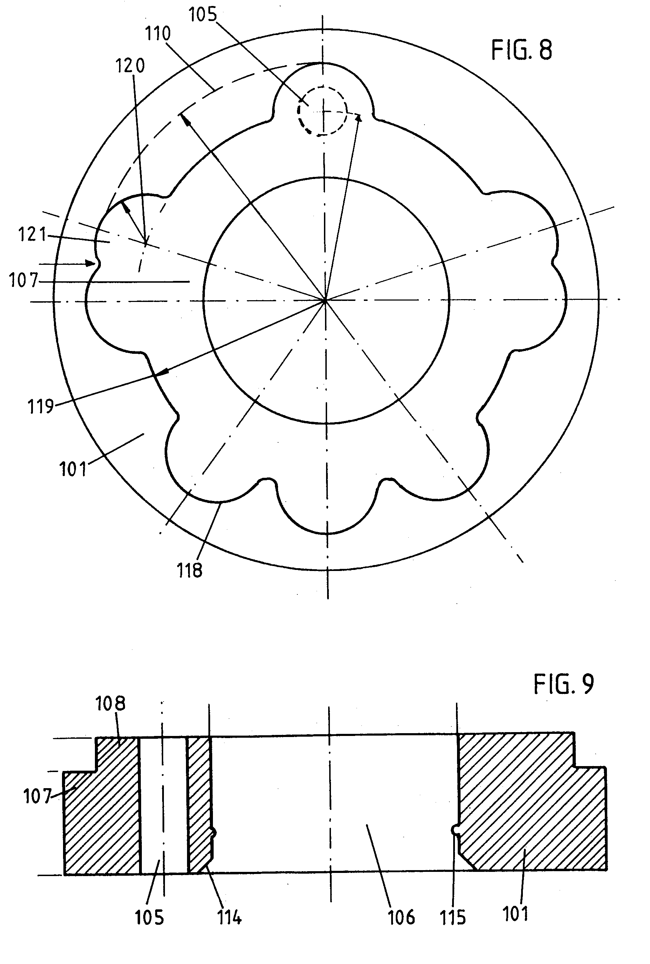

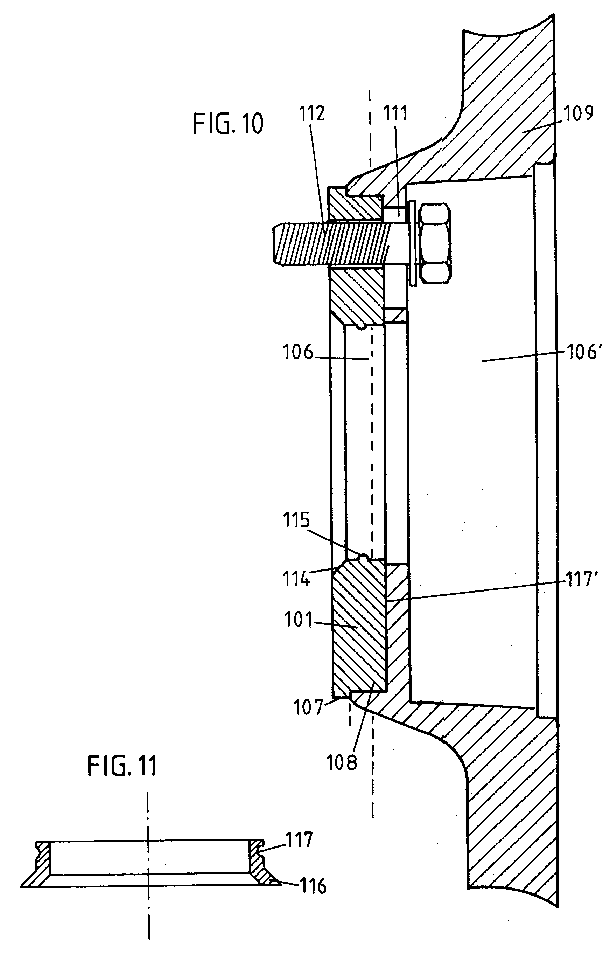

Eine besonders bevorzugte Ausführung der Erfindung ist in den Fig. 7 bis 11 gezeigt. Hier weist die Felge 109 neben ihrer Mittellochbohrung eine flache, ebene Ausnehmung 117' auf, die durch zwei mit der Mittellochbohrung konzentrische Radien 119' und 110' zu beschreiben ist. Der erste, kleinere Radius 119' beschreibt einen regelmäßigen Kreis, auf dem Mittelpunkte 120' noch kleinerer Radien liegen, die über den ersten Radius 119' hinausgehende Ausbuchtungen 121' der Ausnehmung 117' definieren. Die äußere Spitzen der Ausbuchtungen 121' liegen auf dem zweiten, größeren Radius 110'. Die Ausbuchtungen 121' bilden das Schema eines Universallochkreises. Die Adapterscheibe 101 ist bezogen auf die Ausnehmung 117' symmetrisch mit der Felge 109 ausgebildet. Sie besitzt einen Vorsprung 108 die durch zwei mit der Mittellochbohrung konzentrische Radien 119 und 110 zu beschreiben ist. Der erste kleinere Radius 119 beschreibt einen regelmäßigen Kreis, auf dem Mittelpunkte 120 noch kleinerer Radien liegen, die über den ersten Radius 119 hinausgehende Ausbuchtungen 121 der Ausnehmung 117 definieren. Die äußeren Spitzen der Ausbuchtungen 121 liegen auf dem zweiten, größeren Radius 110. Die Ausbuchtungen 121 bilden das Schema eines Universallochkreises. Die Adapterscheibe 101 paßt mit ihrem Vorsprung 108 in die Ausnehmung 117' der Felge, wie in dem Zusammenbau in Fig. 10 dargestellt. Die Mittellochbohrungen 106, 106' von Felge 109 und Adapterscheibe 101 fluchten miteinander, wobei die Mittellochbohrung 106 der Adapterscheibe mit einer Fase 114 und einer Ringwulst 115 für einen gefasten Zentrierring 116 mit einer Ringnut ausgelegt ist. Je nach Lochkreis und Lochkreisdurchmesser werden Bohrungen 105 in der Adapterscheibe angebracht. Über die Bohrungen 105 und ggf. vorgebohrte Langlöcher 111 der Felge werden die Adapterscheibe 101 und die Felge 109 mit den jeweiligen Standardbohrlöchern der Nabe mittels hinter den Langlöchern 111 anliegenden Schrauben 112 verschraubt.

## Patentansprüche

1. Felge (9, 19, 109) mit Adapterscheibe (1, 20, 101) für die Anpassung an unterschiedliche Nabenlochkreise bei Kraftfahrzeugen,
wobei die Adapterscheibe zwischen der Felge und der Habe angeordnet ist,
**dadurch gekennzeichnet**,
daß die Adapterscheibe (1, 20, 101) in wenigstens eine Ausnehmung (10, 11, 23, 24, 117') oder Ausdrehung der Felge eingesetzt ist,
und daß die Adapterscheibe formschlüssig in der wenigstens einen Ausnehmung oder Ausdrehung zentriert ist.

2. Felge mit Adapterscheibe nach Anspruch 1,
**dadurch gekennzeichnet**,
daß die Adapterscheibe mit wenigstens einem Vorsprung (3, 4, 13, 14, 107) in die wenigstens eine Ausnehmung oder Ausdrehung eingesetzt ist.

3. Felge mit Adapterscheibe nach Anspruch 1,
**dadurch gekennzeichnet**,
daß die Adapterscheibe und/oder die Felge als Zwischenprodukt ohne aufgebohrte Lochkreise vorliegen.

4. Felge mit Adapterscheibe nach Anspruch 1 oder 2,
**dadurch gekennzeichnet**,
daß die Felge und die Adapterscheibe Mittenbohrungen (6, 16, 106) aufweisen.

5. Felge mit Adapterscheibe nach Anspruch 4,
**dadurch gekennzeichnet**,
daß die Ausnehmung für die Adapterscheibe als Vertiefung um die Mittenbohrung ausgeführt ist.

6. Felge mit Adapterscheibe nach Anspruch 5,
**dadurch gekennzeichnet**,
daß die Ausnehmung und die Außenkontur der Adapterscheibe zueinander selbstzentrierend und verdrehsicher ausgeführt sind.

7. Felge mit Adapterscheibe nach Anspruch 6,
**dadurch gekennzeichnet**,
daß die Ausnehmung und die Adapterscheibe einen ersten (119) und einen zweiten (110) gemeinsamen Radius aufweisen,
wobei der erste Radius einen Vollkreis beschreibt, auf welchem Mittelpunkte für Ausbuchtungen liegen und der zweite Radius um die äußere Kontur der Ausbuchtungen verläuft.

8. Felge mit Adapterscheibe nach Anspruch 7,
**dadurch gekennzeichnet**,
daß die Ausbuchtungen einen Universallochkreis abdecken.

9. Felge mit Adapterscheibe nach Anspruch 4,
**dadurch gekennzeichnet**,
daß in die Mittenbohrung der Adapterscheibe ein Zentrierring (116) eingesetzt ist.

10. Felge mit Adapterscheibe nach Anspruch 1,
**dadurch gekennzeichnet**,
daß die Adapterscheibe (1, 20) scheibenartig mit in die Lochkreisbohrungen (10, 22) oder eine hinter diesen liegende Ausdrehung (24) der Felge und die Nabenlochbohrung (11) oder einer hinter dieser liegenden Ausdrehung (23) der Felge (9, 19) passend eingreifenden Vorsprüngen (3, 4, 13, 14) ausgebildet ist.

11. Adapterscheibe nach Anspruch 10,
**dadurch gekennzeichnet**,
daß die Vorsprünge (3, 13) für die Lochkreisbohrungen aufgebohrte Durchgangslöcher (5, 15) für die Befestigungsschrauben aufweisen.

12. Adapterscheibe nach Anspruch 10,
**dadurch gekennzeichnet**,
daß die Nabenlochbohrung (6, 16) aus dem vollen Material oder einer kleineren Bohrung aufgebohrt, bzw. ausgedreht oder als Normbohrung zum Einsetzen von Zentrierringen ausgestaltet ist.

13. Adapterscheibe nach Anspruch 10,
**dadurch gekennzeichnet**,
daß die Stärke der Adapterscheibe (1, 20) durch spanende Bearbeitung an die erforderliche Einpreßtiefe anpaßbar ist.

14. Adapterscheibe nach Anspruch 10,
**dadurch gekennzeichnet**,
daß der Adapterscheibe (1) einen dem Felgenprofil entsprechenden umlaufenden Kontursteg (7) aufweist.

15. Adapterscheibe nach Anspruch 10,
**dadurch gekennzeichnet**,
daß er einen zylindrischen, stufenartigen Aufbau aufweist,
bestehend aus einer ersten, an der Felge (19) außen anliegenden Stufe (12),
einer zweiten Stufe (13) mit verringertem Durchmesser und passend in eine hinter den Lochkreisbohrungen (22) angeordnete Ausdrehung (24) der Felge (19) eingreifend, sowie einer dritten Stufe (14) mit weiter verringertem Durchmesser und passend in die Nabenlochbohrung (23) der Felge (19) eingreifend.

16. Adapterscheibe nach Anspruch 10,
**dadurch gekennzeichnet**,
daß er auf seiner der Felge (9, 19) abgewandten Seite gewichtsreduzierende Ausnehmungen aufweist.
